# EUROPÄISCHE PATENTSCHRIFT

(11) **EP 3 475 071 B1**
(45) Veröffentlichungstag und Bekanntmachung des Hinweises auf die Patenterteilung: **23.10.2024**
(21) Anmeldenummer: 17713937.5
(22) Anmeldetag: 28.03.2017
(51) Int. Cl.: B29D 30/06, B60C 19/12, B29C 73/22

(54) **VERFAHREN ZUR HERSTELLUNG EINES SELBSTDICHTENDEN FAHRZEUGLUFTREIFENS**
METHOD FOR PRODUCING A SELF-SEALING PNEUMATIC VEHICLE TYRE
PROCÉDÉ DE FABRICATION D'UN PNEU AUTO-COLMATANT DE VEHICULE

(30) Priorität: 22.06.2016 DE 102016211113
(43) Veröffentlichungstag der Anmeldung: 01.05.2019
(73) Patentinhaber: Continental Reifen Deutschland GmbH, 30175 Hannover (DE)
(72) Erfinder: DAHLKE, Markus, 31515 Wunstorf (DE)
(74) Vertreter: Continental Corporation
(86) Internationale Anmeldenummer: PCT/EP2017/057235
(87) Internationale Veröffentlichungsnummer: WO 2017/220223

(56) Entgegenhaltungen:
- EP-A1- 2 039 499
- EP-A1- 2 168 758
- EP-A2- 0 189 303
- EP-A2- 0 303 183
- DE-A1- 19 750 229
- DE-U1- 202015 006 945
- US-A- 4 116 895
- US-A- 4 206 008
- US-A- 4 957 573
- US-A- 5 085 942
- US-A1- 2010 300 593
- US-A1- 2012 277 335
- US-A1- 2014 174 639

## Beschreibung

Die Erfindung betrifft ein Verfahren zur Herstellung eines selbstdichtenden Fahrzeugluftreifens mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage in etwa die Breite des Gürtelpakets aufweist und in etwa in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche aufweist.

Derartige selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel wird von der Anmelderin unter dem Namen ContiSeal ^{®} eingesetzt. Das Dichtmittel zeichnet sich durch Luftdichtigkeit, starke Klebrigkeit und ausgewogenes Fließverhalten aus.

Aufgrund der starken Klebrigkeit des Dichtmittels der Dichtmittellage bleiben unerwünschte Fremdkörper, die in das Reifeninnere (z.B. während der Lagerung der Reifen) gelangen, an der Dichtmittellage haften, und zwar hierbei insbesondere an der radial nach innen gerichteten Oberfläche der Dichtmittellage. Die radial nach außen gerichtete Oberfläche haftet an der Innenschicht und ist daher nicht exponiert.

Ferner können Bestandteile, wie insbesondere Amine, aus den die Dichtmittellage umgebenden Kautschukmischungen, insbesondere der Innenschicht, migrieren und mit peroxidischen Bestandteilen aus dem Dichtmittel reagieren. Hierbei können sich unerwünschte Kristalle bilden, die ebenfalls an der Dichtmittellage haften.

Weiterhin können auch Peroxide aus der Dichtmittellage migrieren und zusammen mit Aminen aus der Innenschicht an der radial nach innen gerichteten Oberfläche der Innenschicht Kristalle bilden.

Die Kristalle stellen das Reaktionsprodukt der Amine mit den Peroxiden dar.

Die Gebrauchsmusterschrift DE 20 2015 006945 U offenbart einen selbstdichtenden Fahrzeugluftreifen mit einer nach der Vulkanisation des Fahrzeugluftreifens nachträglich radial innen aufgebrachten Dichtmittellage, wobei die Dichtmittellage eine Beschichtung aufweist, die wenigstens ein Alkalisalz wenigstens einer Fettsäure und/oder wenigstens ein Erdalkalisalz wenigstens einer Fettsäure enthält.

Ein Verfahren zum Beschichten einer Innenseite eines unvulkanisierten Fahrzeugluftreifens mit einer Dichtmittelschicht durch Sprühen ist in der Patentanmeldeschrift EP 0 189 303 A2 offenbart.

Die Sprühbeschichtung einer Dichtmittellage auf die Innenseite eines vulkanisierten Fahrzeugluftreifens ist in den Dokumenten US 2010/300593 A1, US 2012/277335 A1 und US 4,206,008 offenbart.

Die Aufgabe der vorliegenden Erfindung besteht darin, ein Verfahren zur Herstellung eines selbstdichtenden Fahrzeugluftreifens bereitzustellen, sodass keine Fremdkörper auf der Dichtmittellage im Reifeninneren anhaften und eine Kristallbildung auf der freien Oberfläche im Reifeninneren stark reduziert oder sogar ganz verhindert wird.

Die Aufgabe wird dadurch gelöst, dass die Dichtmittellage durch Auftragen mit einer Sprühpistole oder mit einem rotierenden Sprühteller mit einer Suspension beschichtet wird, welche wenigstens ein Alkalisalz wenigstens einer Fettsäure und/oder wenigstens ein Erdalkalisalz wenigstens einer Fettsäure enthält.

Eine derartige Beschichtung setzt die Klebrigkeit der radial nach innen gerichteten Oberfläche der Dichtmittellage derart signifikant herab, dass (nahezu) keine unerwünschten Fremdkörper an der radial nach innen gerichteten im Wesentlichen parallel zum Gürtelpaket verlaufenden Oberfläche der Dichtmittellage anhaften.

Ferner reduziert das Alkalisalz und/oder Erdalkalisalz wenigstens einer Fettsäure auf der Dichtmittellage das Ausmaß der Reaktion zwischen Aminen aus benachbarten Kautschukmischungen und Peroxiden bzw. deren Radikalen (deren radikalischen Spaltprodukten) aus dem Dichtmittel, sodass eine unerwünschte Kristallbildung auf der beschichteten Dichtmittellage nicht oder nur in nicht signifikantem Ausmaß erfolgt.

Der hergestellte Fahrzeugluftreifen weist zudem keine negative Beeinträchtigung hinsichtlich der selbstdichtenden Eigenschaften auf.

Geeignete Sprühpistolen, insbesondere zum Auftragen von, bevorzugt wässrigen, Suspensionen der oben genannten Art, sind dem Fachmann bekannt. Sprühpistolen werden auch als Spritzpistolen bezeichnet.

Die verwendete Sprühpistole weist bevorzugt eine Düse auf, deren Öffnung einen Durchmesser von 0,1 bis 6 mm aufweist.

Das Sprühen erfolgt bevorzugt programmgesteuert, wobei die Sprühpistole gezielt geführt wird und Bereiche des Reifens, in denen die Beschichtung nicht aufgetragen werden soll, wie z. B. der Wulstbereich, ausgespart werden. Somit wird die Beschichtung bevorzugt nicht dort aufgetragen, wo der erfindungsgemäße Fahrzeugluftreifen auf der Felge aufsitzt bzw. Kontakt mit der Felge hat, um ein Verrutschen zwischen Reifen und Felge im Kontaktbereich zu vermeiden.

Bei dem Auftragen mit einer Sprühpistole ist es bevorzugt, dass der selbstdichtende Fahrzeugluftreifen in Umfangsrichtung rotiert wird. Hierdurch wird die Suspension gleichmäßig auf der Dichtmittellage verteilt.

Im Fall des Auftragens mit einem rotierenden Sprühteller kann der Reifen ebenfalls rotiert werden, bevorzugt wird er jedoch dann nicht rotiert.

Sprühteller sind dem Fachmann bekannt. Hierbei wird die zu sprühende Flüssigkeit (oder Suspension) über einen Kanal auf den Teller gebracht, welcher aufgrund der Rotation über Zentripetalkräfte die Flüssigkeit bzw. Suspension auf das Reifeninnere schleudert. Auch hier erfolgt das Sprühen bevorzugt gezielt unter Aussparung der Bereiche, die nicht beschichtet werden sollen, wie z. B. der Wulstbereich.

Das Auftragen mit einer Sprühpistole oder mit einem rotierenden Sprühteller ist vergleichsweise einfach und kann automatisiert erfolgen.

Gemäß einer besonders bevorzugten Ausführungsform der Erfindung erfolgt das Auftragen mit einem rotierenden Sprühteller, und zwar insbesondere bevorzugt, wenn die beschriebene Suspension keine Sand-Körner oder Elastomer-Partikel enthält, s. unten.

Erfindungswesentlich ist es, dass die Beschichtung eines oder mehrere Salze von Fettsäuren enthält. Hierdurch wird die Klebrigkeit der Oberfläche der Dichtmittellage stark herabgesetzt und die Kristallbildung im Reifeninneren reduziert. Gleichzeitig wird die Dichtleistung des selbstdichtenden Fahrzeugluftreifens mit einer derartigen Beschichtung nicht negativ beeinträchtigt.

Fettsäuren sind dem Fachmann bekannt und stellen gemäß Römpp Online ^{®} 2015 "aliphatische, gesättigte und ungesättigte Carbonsäuren mit bis auf wenige Ausnahmen unverzweigter Kohlenstoff-Kette" dar.

Besonders bevorzugt ist es im Rahmen der vorliegenden Erfindung, wenn die Fettsäure 8 bis 18 Kohlenstoffatome aufweist.

Hierdurch wird die oben beschriebene Reaktion von Aminen mit Peroxiden zu unerwünschten Kristallen besonders effektiv vermieden. Bei der Anzahl von 8 bis 18 Kohlenstoffatomen ist es besonders bevorzugt, wenn es sich um lineare unverzweigte Kohlenstoffketten handelt.

Bevorzugte Fettsäuren, bzw. deren Salze wie unten beschrieben, sind beispielsweise und insbesondere

Octansäure (auch Caprylsäure genannt) mit 8 Kohlenstoffatomen und/oder Tetradecansäure (auch Myristinsäure genannt) mit 14 Kohlenstoffatomen und/oder Hexadecansäure (auch Palmitinsäure genannt) mit 16 Kohlenstoffatomen und/oder Octadecansäure (auch Stearinsäure genannt) mit 18 Kohlenstoffatomen.

Gemäß einer bevorzugten Ausführungsform der Erfindung ist die Fettsäure ausgewählt aus der Gruppe bestehend aus Octansäure und/oder Tetradecansäure und/oder Hexadecansäure und/oder Octadecansäure.

Gemäß einer besonders bevorzugten Ausführungsform der Erfindung handelt es sich bei der Fettsäure wenigstens um Octadecansäure.

Erfindungsgemäß ist die wenigstens eine Fettsäure in Form wenigstens eines Alkali- und/oder Erdalkalisalzes in der Beschichtung enthalten.

Unter "Alkalisalz wenigstens einer Fettsäure" ist im Rahmen der vorliegenden Erfindung das Alkalimetallsalz wenigstens einer Fettsäure zu verstehen, wobei Alkalimetalle in Salzen formal einfach positiv geladen sind, wie beispielsweise und insbesondere die Alkalimetallionen von Lithium (Li⁺), Natrium (Na⁺), Kalium (K⁺), Rubidium (Rb⁺). Bevorzugt handelt es sich bei dem Alkalimetallion des Salzes um Lithium (Li⁺) und/oder Natrium (Na⁺) und/oder Kalium (K⁺).

Die Ionen der Fettsäure sind formal einfach negativ geladen, sodass bei dem Alkalisalz der Fettsäure jeweils ein Alkalimetallion und ein Ion der Fettsäure (Carboxylat-Ion) einer formal neutralen Ladung entsprechen.

Es kann sich bei dem wenigstens einen Alkalisalz wenigstens einer Fettsäure auch um ein Gemisch verschiedener Alkalisalze handeln, bei dem die Alkalimetalle und/oder die Fettsäuren gleich oder verschieden voneinander sind. Das Gleiche gilt für das wenigstens eine Erdalkalisalz wenigstens einer Fettsäure. Auch hier kann es sich um ein Gemisch handeln, bei dem die Erdalkalimetalle und/oder Fettsäuren gleich oder verschieden voneinander sind.

Unter "Erdalkalisalz wenigstens einer Fettsäure" ist im Rahmen der vorliegenden Erfindung das Erdalkalimetallsalz wenigstens einer Fettsäure zu verstehen, wobei Erdalkalimetalle in Salzen formal zweifach positiv geladen sind, wie beispielsweise und insbesondere die Erdalkalimetallionen Beryllium (Be²⁺), Magnesium (Mg²⁺), Calcium (Ca²⁺), usw.

Bevorzugt handelt es sich bei dem Erdalkalimetallion des Salzes um Magnesium (Mg²⁺) und/oder Calcium (Ca²⁺), besonders bevorzugt Calcium (Ca²⁺).

Bei dem Erdalkalisalz der Fettsäure entsprechen ein Erdalkalimetallion und zwei Ionen der Fettsäure einer formal neutralen Ladung.

Gemäß einer bevorzugten Ausführungsform der Erfindung enthält die Beschichtung wenigstens ein Alkalisalz wenigstens einer Fettsäure und wenigstens ein Erdalkalisalz wenigstens einer Fettsäure.

Gemäß einer besonders bevorzugten Ausführungsform der Erfindung ist das Erdalkalisalz wenigstens einer Fettsäure wenigstens Calciumstearat.

Die bevorzugt wässrige Suspension enthält vor dem Auftragen bevorzugt 50 bis 70 Gew.-% Wasser, besonders bevorzugt 58 bis 65 Gew.-% Wasser.

Eine geeignete wässrige Suspension, die Calciumstearat und wenigstens ein Alkalisalz wenigstens einer Fettsäure enthält, ist beispielsweise unter dem Handelsnamen Rhenodiv^{®} BO 7672-1 der Firma Rheinchemie erhältlich.

Eine derartige Suspension enthält vor dem Auftragen und Trocknen 58 bis 70 Gew.-% Wasser, 10 bis 20 Gew.-% wenigstens eines Alkalisalzes wenigstens einer Fettsäure, 10 bis 20 Gew.-% Calciumstearat und weniger als 2 Gew.-% Zusatzstoffe bzw. Verunreinigungen.

Gemäß einer bevorzugten Ausführungsform der Erfindung enthält die Suspension als weiteren Bestandteil Sand. Der Sand bleibt ebenfalls auf der klebrigen Oberfläche der Dichtmittellage haften und setzt somit deren Klebrigkeit weiter herab.

Die US 2014/0174639 A1 offenbart zum Herabsetzen der Klebrigkeit, die Dichtmittelschicht mit Baumwollfasern oder Aramidfasern oder Glasfasern oder lamellaren Füllstoffen wie Graphite, Glimmer oder Talk zu beschichten. Allerdings können derartige Partikel die Dichtwirkung im Pannenfall negativ beeinträchtigen, da sie den Verschluss der Pannenstelle negativ beeinflussen können.

Sand-Körner als Beschichtung beeinträchtigen nicht den Verschluss der Pannenstelle. Der erfindungsgemäß hergestellte Fahrzeugluftreifen weist daher auch in den Ausführungsformen mit Sand keine negative Beeinträchtigung hinsichtlich der selbstdichtenden Eigenschaften auf.

Bei dem Sand kann es sich um alle dem Fachmann bekannten Typen mit einer Korngröße von 0,06 bis 2 mm, bevorzugt 0,06 bis 1 mm handeln.

Unter dem Begriff Korngröße ist im Rahmen der vorliegenden Erfindung das Zahlenmittel der Korngrößenverteilung zu verstehen. Die Korngröße bzw. Korngrößenverteilung wird im Rahmen der vorliegenden Erfindung über den Siebrückstand aus der Trockensiebung gemäß DIN 66165 bestimmt.

Bevorzugt ist der Sand ein Quarz-Sand. Es ist auch ein Gemisch verschiedener Sand-Typen denkbar.

Gemäß einer bevorzugten Ausführungsform der Erfindung enthält die Suspension als weiteren Bestandteil Elastomer-Partikel.

Gemäß einer bevorzugten Ausführungsform der Erfindung weisen die Elastomer-Partikel eine Partikel-Größe von 0,05 bis 2 mm auf. Die Elastomer-Partikel können somit Pulver oder Granulat sein. Die Form der Elastomer-Partikel kann dabei sphärisch, flächig oder länglich sein. Ab einer Partikelgröße von > 1 mm handelt es sich um Granulat.

Pulver wird im Rahmen der vorliegenden Erfindung auch als Mehl bezeichnet.

Gemäß einer bevorzugten Ausführungsform der Erfindung handelt es sich um Elastomer-Partikel, die als Pulver vorliegen und bevorzugt eine Partikelgröße von 0,05 bis 1 mm, besonders bevorzugt 0,1 bis 1 mm, aufweisen.

Unter dem Begriff Partikelgröße ist im Rahmen der vorliegenden Erfindung das Zahlenmittel der Partikelgrößenverteilung zu verstehen. Die Partikelgröße bzw. Partikelgrößenverteilung wird im Rahmen der vorliegenden Erfindung gemäß DIN 53734 über den Siebrückstand aus der Luftstrahlsiebung bestimmt.

Elastomer-Partikel bleiben ebenfalls auf der klebrigen Oberfläche der Dichtmittellage haften und setzen somit deren Klebrigkeit weiter herab. Elastomer-Partikel als Beschichtung beeinträchtigen nicht den Verschluss der Pannenstelle. Der erfindungsgemäß hergestellte Fahrzeugluftreifen weist daher auch in den Ausführungsformen mit Elastomer-Partikeln keine negative Beeinträchtigung hinsichtlich der selbstdichtenden Eigenschaften auf.

Unter dem Begriff "Elastomer-Partikel" werden im Rahmen der vorliegenden Erfindung vulkanisierte, d.h. vernetzte, oder zumindest teilweise vulkanisierte oder unvulkanisierte oder devulkanisierte oder zumindest teilweise devulkanisierte Partikel von Elastomeren oder Elastomermischungen verstanden.

Vulkanisierte Elastomer-Partikel können beispielsweise und bevorzugt je nach Partikelgröße Gummimehl oder Gummipulver oder Gummigranulat sein, welche man durch Mahlen von vulkanisierten technischen Gummiartikeln, inkl. Fahrzeugreifen bzw. den Reifenbauteilen, oder durch Abrauen von Fahrzeugreifen, bevorzugt Altreifen, erhalten kann. Unter Altreifen werden Fahrzeugreifen verstanden, die nach der Benutzung dem Recycling zur Verfügung stehen.

Teilweise vulkanisierte Elastomer-Partikel können beispielsweise und bevorzugt Partikel einer vorvernetzten Kautschukmischung aus der Produktion von Kautschukmischungen, bevorzugt für Fahrzeugreifen, sein. Auch diese können als Mehl/Pulver oder Granulat vorliegen.

Unvulkanisierte Elastomer-Partikel können beispielsweise und bevorzugt Partikel einer unvulkanisierten Kautschukmischung aus der Produktion von Kautschukmischungen, bevorzugt für Fahrzeugreifen, sein.

Devulkanisierte Elastomer-Partikel können beispielsweise und bevorzugt Partikel einer devulkanisierten Kautschukmischung aus Altreifen sein, welche auch als Gummiregenerat bekannt sind. Verfahren zum Devulkanisieren von vulkanisierten, insbesondere schwefelvernetzten, Kautschukmischungen sind dem Fachmann bekannt. Hierbei wird das bevorzugt schwefelvernetzte Gummivulkanisat zunächst zerkleinert. Das Zerkleinern des schwefelvernetzten Gummivulkanisates erfolgt mittels im Stand der Technik bekannten Mahlverfahren, insbesondere einem ambienten oder kryogenen Mahlverfahren. Das zerkleinerte Gummivulkanisat wird anschließend devulkanisiert, wobei im Fall einer Schwefelvernetzung möglichst alle Schwefelbrücken aufgebrochen werden ohne, dass die Polymerketten beschädigt werden. Ein geeignetes Verfahren ist beispielsweise in der WO 2014032818 A1 beschrieben.

Teilweise devulkanisierte Elastomer-Partikel sind entsprechend Partikel, die nicht vollständig devulkanisiert sind.

Bevorzugt basieren die Elastomer-Partikel auf natürlichem Polyisopren und/oder synthetischem Polyisopren und/oder Polybutadien und /oder Styrol-Butadien-Copolymer und/oder Butyl-Kautschuk und/oder Halobutylkautschuk und/oder Nitril-Butadien-Kautschuk (NBR) und/oder Hydrierter Acrylnitrilbutadien-Kautschuk (HNBR) und/oder Ethylen-Propylen-Dien-Kautschuk (EPDM) jeweils in der entsprechenden Form vor, also unvulkanisiert, zumindest teilweise vulkanisiert, vulkanisiert, devulkanisiert oder zumindest teilweise devulkanisiert.

Im Falle von schwefelvernetzten Gummivulkanisaten können diese dabei bevorzugt auf folgenden Kautschuken alleine oder im Verschnitt basieren: natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk und/oder Nitril-Butadien-Kautschuk (NBR) und/oder Hydrierter Acrylnitrilbutadien-Kautschuk (HNBR) und/oder Ethylen-Propylen-Dien-Kautschuk (EPDM). Auch hier liegen die genannten Kautschuke dann in der jeweils in der entsprechenden Form vor, also unvulkanisiert, zumindest teilweise vulkanisiert, vulkanisiert, devulkanisiert oder zumindest teilweise devulkanisiert und zwar als Mehl/Pulver oder Granulat.

Besonders bevorzugt enthält das schwefelvernetzte Gummivulkanisat natürliches Polyisopren (NR) und/oder synthetisches Polyisopren (IR) und/oder Butadienkautschuk (BR) und/oder Styrol-Butadienkautschuk (SBR) und/oder Butyl-Kautschuk und/oder Halobutylkautschuk.

Gemäß einer besonders vorteilhaften Ausführungsform der Erfindung handelt es sich bei den Elastomer-Partikeln um wenigstens ein Gummiregenerat, inkl. der beschriebenen bevorzugten und besonders bevorzugten Ausführungsformen.

Es ist auch ein Gemisch verschiedener der genannten Elastomer-Partikel denkbar.

Elastomer-Partikel und Sand können auch gleichzeitig in der Suspension vorhanden sein.

Für den Fall, dass Elastomer-Partikel und/oder Sand-Körner in der Suspension vorhanden sind, erfolgt das Auftragen bevorzugt mit einer Sprühpistole. Je nachdem, welche Korn- bzw. Partikel-Größe diese aufweisen, muss ggf. die Düse der Sprühpistole angepasst werden. Es ist aber auch denkbar, dass die Suspension enthaltend Elastomer-Partikel und/oder Sand-Körner mit einem Sprühteller aufgetragen werden, wobei auch hier ggf. Anpassungen, wie insbesondere der Rotationsgeschwindigkeit des Sprühtellers, vorgenommen werden müssen.

Da bevorzugt eine wässrige Suspension aufgetragen wird, verdampft bevorzugt als Bestandteil der erhaltenen Beschichtung Wasser.

Die aufgetragene Suspension wird bevorzugt für 4 bis 8 Stunden getrocknet, wobei eine Restmenge an Wasser in der Beschichtung verbleiben kann.

Damit das zu verdampfende Wasser möglichst schnell austritt, ist es bevorzugt, dass die Temperatur des selbstdichtenden Fahrzeugluftreifens beim Auftragen der Suspension 30 bis 70 °C, bevorzugt 30 bis 50 °C, beträgt.

Eine Temperatur von mehr als 70 °C ist jedoch nicht notwendig und zudem unerwünscht, da dies zum einen eine zu hohe Temperatur für den Operateur mit den damit verbundenen Risiken beim Auftragen bedeuten würde. Zum anderen können bei zu hohen Temperaturen Substanzen aus den Reifenbauteilen, insbesondere der Innenschicht und der Dichtmittellage, in unerwünschtem Maße verdampfen und sich anschließend wieder an deren Oberflächen niederschlagen.

Somit stellt das Auftragen bei 30 bis 70 °C, bevorzugt 30 bis 50 °C, einen guten Kompromiss aus Verdampfungsgeschwindigkeit bei minimierten Risiken hinsichtlich Gefahren und Umwelt sowie möglichst geringen Energiekosten dar.

Für den Fall, dass keine Feststoffpartikel wie Sand und/oder Elastomer-Partikel in der Suspension enthalten sind, wird diese bevorzugt derart aufgetragen, dass nach dem Trocken eine Beschichtung mit einer Dicke von 0,01 bis 1 mm, besonders bevorzugt 0,05 bis 0,15 mm, verbleibt.

Eine derartige Dicke gewährleistet die Herabsetzung der Klebrigkeit auch bei kleinen Unebenheiten der Oberfläche der Dichtmittellage. Gleichzeitig wird bei einer derartigen Dicke eine nicht zu große Menge der Beschichtung (Suspension) aufgetragen, sodass das Reifengewicht und damit das Rollwiderstandsverhalten des erfindungsgemäßen Fahrzeugluftreifens nicht signifikant negativ beeinträchtigt wird.

Die Angabe der Dicke der Beschichtung stellt die in radialer Richtung senkrecht zur axialen Erstreckung der Dichtmittellage gemessene Dicke dar.

Hierbei ist es denkbar, dass die Dicke der Beschichtung in axialer Richtung um 0 bis 0,005 mm variiert.

Für den Fall, dass Feststoffpartikel wie Sand und/oder Elastomer-Partikel in der Suspension enthalten sind, wird die resultierende Dicke der Beschichtung überwiegend durch die Korn- bzw. Partikelgröße des Sandes bzw. der Elastomer-Partikel bestimmt.

Im Rahmen der vorliegenden Erfindung bedeutet der Ausdruck "im Wesentlichen" bei der Beschreibung der Anordnung der einzelnen Bauteile des erfindungsgemäßen Fahrzeugluftreifens, dass übliche herstellungsbedingte geringfügige Schwankungen mit eingeschlossen sind.

Die Dichtmittellage weist im Wesentlichen die Breite des Gürtelpakets auf.

Die Dichtmittellage ist im Wesentlichen in dessen Projektion (der Projektion des Gürtelpaketes) angeordnet, d.h. sie verläuft radial innerhalb des Gürtelpaketes im Wesentlichen parallel zu diesem.

Die Dichtmittellage weist einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche auf.

Die Dichtmittellage weist bevorzugt im Wesentlichen einen rechteckigen Querschnitt auf, wobei sie je nach Ausgestaltung der Reifendimensionen insbesondere in Projektion der Schulterkanten des Gürtelpaketes eine Krümmung aufweisen kann.

Die Dichtmittellage wird nach radial außen durch die Innenschicht und nach radial innen durch ihre radial nach innen gerichtete in axialer Richtung, im Wesentlichen parallel zum Gürtelpaket, verlaufenden Oberfläche begrenzt und zu beiden Seiten, bevorzugt im Wesentlichen symmetrisch, durch die in radialer Richtung, im Wesentlichen senkrecht zum Gürtelpaket, verlaufenden Oberflächen begrenzt.

Gemäß einer bevorzugten Ausführungsform der Erfindung wird die Suspension zumindest auf die in axialer Richtung im Wesentlichen parallel zum Gürtelpaket verlaufende Oberfläche der Dichtmittellage aufgetragen. Hierdurch wird ein Großteil der exponierten Oberfläche der Dichtmittellage beschichtet, sodass an dieser beschichteten Oberfläche keine Fremdkörper mehr anhaften können und eine unerwünschte Kristallbildung an dieser Oberfläche gar nicht oder nur in nicht signifikantem Maß stattfindet.

Gemäß einer bevorzugten Weiterbildung der Erfindung wird die Suspension zusätzlich wenigstens auf die in radialer Richtung verlaufende Oberfläche der Dichtmittellage aufgetragen. Hierdurch können auch an den im Querschnitt seitlichen Bereichen der Dichtmittellage keine Fremdkörper anhaften und eine Kristallbildung ist auch hier reduziert bzw. sogar ganz unterbunden.

Bevorzugt wird die Beschichtung hierbei derart auf die in radialer Richtung verlaufende Oberfläche der Dichtmittellage aufgetragen, dass an beiden Seiten in axialer Richtung eine Überlappung mit der Innenschicht vorhanden ist.

Die axiale Breite der Überlappung beträgt bevorzugt an beiden Seiten jeweils 0,5 bis 10 mm, bevorzugt 0,5 bis 2 mm, besonders bevorzugt 1 mm. Die Beschichtung befindet sich somit in dieser Ausführungsform auf der gesamten Oberfläche der Dichtmittellage und an beiden Seiten jeweils einem in axialer Richtung 0,5 bis 10 mm, bevorzugt 0,5 bis 2 mm, besonders bevorzugt 1 mm, breitem unmittelbar an die Dichtmittellage angrenzenden Abschnitt der Innenschicht.

Hierdurch wird besonders wirksam sichergestellt, dass auch an den Seiten der Dichtmittellage keine Fremdkörper anhaften und sich dort auch keine Kristalle bilden.

Insbesondere durch Verdampfen und anschließende Kondensation von Aminen und Peroxiden bzw. deren radikalischen Spaltprodukten (wie oben beschrieben) können sich auch an den beiden seitlichen Reifeninnenwänden Kristalle bilden.

Gemäß einer bevorzugten Ausführungsform der Erfindung wird die Suspension daher zusätzlich auf die radial nach innen gerichtete Oberfläche der Innenschicht aufgetragen. In dieser Ausführungsform ist es bevorzugt, dass die Suspension keine Elastomer-Partikel und keine Sand-Körner enthält, welche trotz Vorhandensein der Suspension nicht dauerhaft an der Innenschicht haften.

Die radial nach außen gerichtete Oberfläche der Innenschicht haftet an den radial außerhalb an die Innenschicht angrenzenden Reifenbauteilen und ist daher nicht exponiert. Dadurch, dass auch die Innenschicht im Reifeninneren mit der oben beschriebenen Beschichtung beschichtet ist, wird auch an den beiden seitlichen Reifeninnenwänden ein Kristallwachstum verhindert.

Bevorzugt wird die Innenschicht hierbei an beiden Seiten von der Dichtmittellage bis zum radial äußeren Erstreckungsende des Wulstkernes beschichtet. Somit wird die Beschichtung bevorzugt nicht dort aufgetragen, wo der erfindungsgemäße Fahrzeugluftreifen auf der Felge aufsitzt bzw. Kontakt mit der Felge hat, um ein Verrutschen zwischen Reifen und Felge im Kontaktbereich zu vermeiden.

Gemäß dieser Ausführungsform ist, wenn der Reifen auf der Felge sitzt, somit bevorzugt die gesamte innere Oberfläche des Fahrzeugluftreifens lückenlos umlaufend beschichtet. Optisch ist dies u.a. daran erkennbar, dass die Dichtmittellage und die Reifeninnenseiten mit einem Grauschleier belegt sind.

Im Sinne eines einfachen Herstellverfahrens des erfindungsgemäßen Fahrzeugluftreifens, wird die Beschichtung auf der Oberfläche der Innenschicht und der Oberfläche der Dichtmittellage mit gleicher Dicke aufgetragen.

Weitere Merkmale, Vorteile und Einzelheiten der Erfindung werden anhand der folgenden Beispiele erläutert.

Ein Fahrzeugluftreifen-Rohling wurde zunächst mit im Stand der Technik bekannten Verfahrensschritten bereitgestellt und anschließend vulkanisiert. Der Reifen wurde bei Raumtemperatur auf 50 °C abgekühlt. Anschließend wurde der Reifen auf eine dem Fachmann bekannte Vorrichtung gebracht, die den Reifen um seine Achse in Umlaufrichtung rotiert. Hierbei wurde mit einer Sprühpistole die wässrige Suspension enthaltend wenigstens ein Alkalisalz wenigstens einer Fettsäure und/oder wenigstens ein Erdalkalisalz wenigstens einer Fettsäure aufgebracht. Als Suspension wurde Rhenodiv^{®} BO 7672-1 der Firma Rheinchemie verwendet.

Die Suspension wurde hierbei auf die in axialer Richtung im Wesentlichen parallel zum Gürtelpaket verlaufende Oberfläche der Dichtmittellage aufgetragen und für 6 Stunden getrocknet, wobei Wasser aus der Suspension verdampft ist.

In einem weiteren Beispiel wurde der Reifen nicht rotiert und die genannte Suspension Rhenodiv^{®} BO 7672-1 der Firma Rheinchemie mittels eines rotierenden Sprühtellers aufgebracht und ebenfalls für 6 Stunden getrocknet.

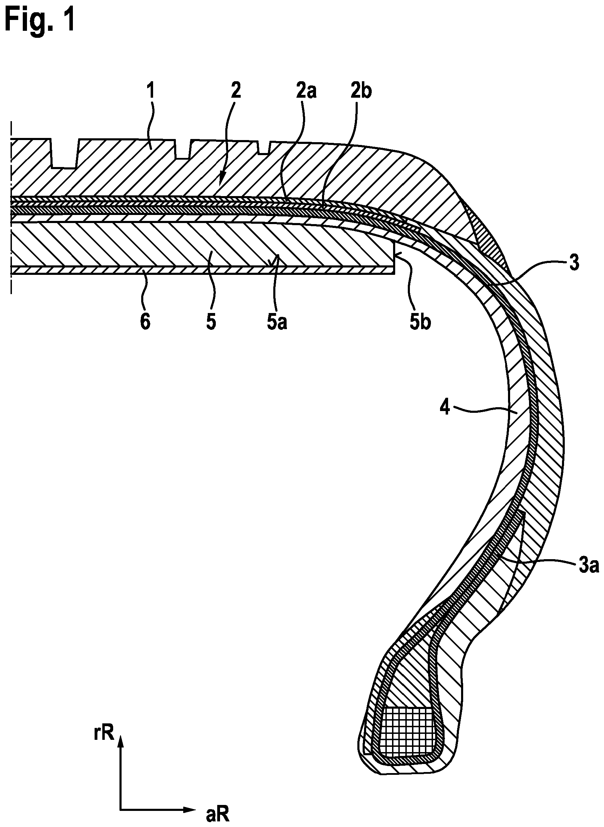

Wie an Fig. 1 erkennbar ist, verbleibt z. B. eine Beschichtung 6 auf der in axialer Richtung im Wesentlichen parallel zum Gürtelpaket verlaufende Oberfläche der Dichtmittellage 5a. Die Dichte der Beschichtung nach 6 Stunden Trocken betrug 0,1 mm.

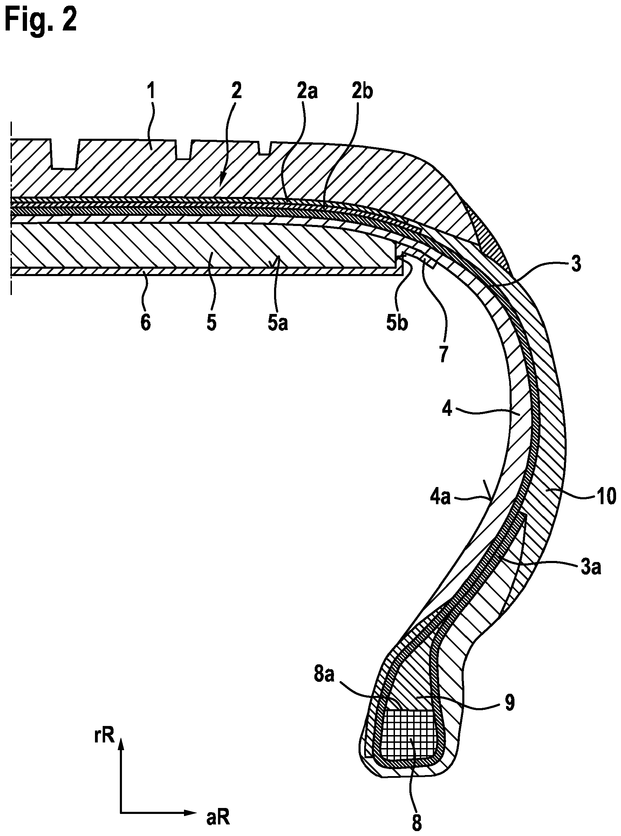

In einem weiteren Beispiel wird die Suspension zusätzlich wenigstens auf die in radialer Richtung verlaufende Oberfläche der Dichtmittellage 5b aufgetragen und zwar mit einer Überlappung zur Innenschicht 4 von jeweils 1 mm an beiden Seiten (in axialer Richtung). Somit weist der damit hergestellte Fahrzeugluftreifen die Beschichtung auf der gesamten nach innen exponierten Oberfläche der Dichtmittellage 5 auf. Hierbei ist es bevorzugt, dass die Beschichtung derart auf die Oberfläche 5b aufgetragen wird, dass an beiden Seiten in axialer Richtung eine Überlappung mit der Innenschicht vorhanden ist, wie in Fig. 2 erkennbar ist.

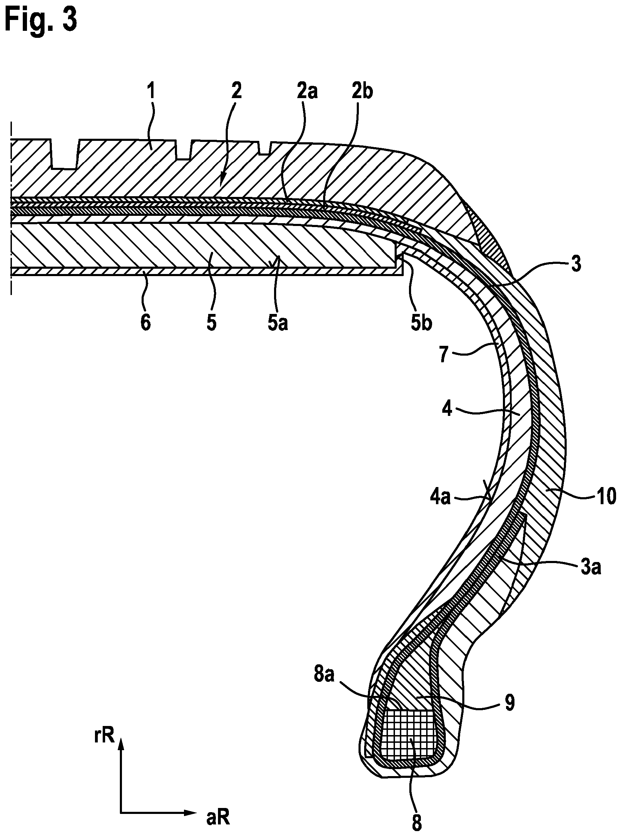

In einem weiteren Beispiel wird die Suspension zusätzlich zu der gesamten Oberfläche der Dichtmittellage auch auf die radial nach innen gerichtete Oberfläche der Innenschicht aufgetragen. Somit weist der damit hergestellte Fahrzeugluftreifen die Beschichtung auf der gesamten inneren Oberfläche auf, wie in Fig. 3 erkennbar ist. Die Suspension wird bevorzugt nur bis zum radial äußeren Erstreckungsende des Wulstkernes aufgetragen, um ein Verrutschen zwischen Reifen und Felge zu vermeiden.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 4a: radial nach innen gerichtete Oberfläche der Innenschicht
- 5: Dichtmittellage
- 5a: radial nach innen gerichtete in axialer Richtung, im Wesentlichen parallel zum Gürtelpaket, verlaufende Oberfläche der Dichtmittellage
- 5b: in radialer Richtung, im Wesentlichen senkrecht zum Gürtelpaket, verlaufende Oberfläche der Dichtmittellage
- 6: Beschichtung
- 7: Überlappung
- 8: Wulstkern
- 8a: radial äußeres Erstreckungsende des Wulstkernes
- 9: Wulstkernprofil
- 10: Seitenwand

- rR: radiale Richtung
- aR: axiale Richtung

## Patentansprüche

1. Verfahren zur Herstellung eines selbstdichtenden Fahrzeugluftreifens mit einem Gürtelpaket (2), einem radial oberhalb des Gürtelpakets (2) angeordneten Laufstreifen (1) und einer radial innen angeordneten luftdicht ausgeführten Innenschicht (4), wobei die Selbstdichtung des Fahrzeugluftreifens durch eine nach der Vulkanisation des Fahrzeugluftreifens nachträglich radial innen aufgebrachten Dichtmittellage (5) erhalten ist, wobei die Dichtmittellage (5) in etwa die Breite des Gürtelpakets (2) aufweist und in etwa in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche (5a) und einer im Wesentlichen in radialer Richtung verlaufenden Oberfläche (5b) aufweist,
wobei die Dichtmittellage (5) durch Auftragen wenigstens einer Suspension mit einem rotierenden Sprühteller oder mit einer Sprühpistole beschichtet wird und
wobei die Suspension wenigstens ein Alkalisalz wenigstens einer Fettsäure und/oder wenigstens ein Erdalkalisalz wenigstens einer Fettsäure enthält.

2. Verfahren nach Anspruch 1, **dadurch gekennzeichnet, dass** die Suspension 50 bis 70 Gew.-% Wasser enthält.

3. Verfahren nach einem der vorherigen Ansprüche, **dadurch gekennzeichnet, dass** die die Fettsäure 8 bis 18 Kohlenstoffatome aufweist.

4. Verfahren nach einem der vorherigen Ansprüche, **dadurch gekennzeichnet, dass** die Suspension als Erdalkalisalz wenigstens einer Fettsäure wenigstens Calciumstearat enthält.

5. Verfahren nach einem der vorherigen Ansprüche, **dadurch gekennzeichnet, dass** die Suspension Sand enthält.

6. Verfahren nach einem der vorherigen Ansprüche, **dadurch gekennzeichnet, dass** die Suspension Elastomer-Partikel enthält.

7. Verfahren nach einem der vorherigen Ansprüche, **dadurch gekennzeichnet, dass** die Temperatur des selbstdichtenden Fahrzeugluftreifens beim Auftragen der Suspension 30 bis 70 °C beträgt.

8. Verfahren nach einem der vorherigen Ansprüche, **dadurch gekennzeichnet, dass** die Suspension zumindest auf die in axialer Richtung im Wesentlichen parallel zum Gürtelpaket verlaufende Oberfläche der Dichtmittellage (5a) aufgetragen wird.

9. Verfahren nach Anspruch 8, **dadurch gekennzeichnet, dass** die Suspension zusätzlich wenigstens auf die in radialer Richtung verlaufende Oberfläche der Dichtmittellage (5b) aufgetragen wird.

10. Verfahren nach Anspruch 9, **dadurch gekennzeichnet, dass** die Suspension zusätzlich auf die radial nach innen gerichtete Oberfläche der Innenschicht (4) aufgetragen wird.

## Claims

1. Process for producing a self-sealing pneumatic vehicle tyre having a belt package (2), a tread (1) arranged radially above the belt package (2) and an airtight inner layer (4) arranged radially on the inside, wherein the self-sealing of the pneumatic vehicle tyre is obtained via a sealant layer (5) subsequently applied radially on the inside after the vulcanization of the pneumatic vehicle tyre, wherein the sealant layer (5) has approximately the width of the belt package (2) and is arranged approximately in the projection thereof and has a cross section which is formed in the cross-sectional plane including the tyre axis and has a surface (5a) running substantially parallel to the belt package in the axial direction and a surface (5b) running substantially in the radial direction, wherein the sealant layer (5) is coated by applying at least one suspension with a rotating spray turntable or with a spray gun and wherein the suspension contains at least one alkali metal salt of at least one fatty acid and/or at least one alkaline earth metal salt of at least one fatty acid.

2. Process according to Claim 1, **characterized in that** the suspension contains 50% to 70% by weight of water.

3. Process according to either of the preceding claims, **characterized in that** the fatty acid has 8 to 18 carbon atoms.

4. Process according to one of the preceding claims, **characterized in that** at least calcium stearate is present in the suspension as alkaline earth metal salt of at least one fatty acid.

5. Process according to one of the preceding claims, **characterized in that** the suspension contains sand.

6. Process according to one of the preceding claims, **characterized in that** the suspension contains elastomer particles.

7. Process according to one of the preceding claims, **characterized in that** the temperature of the self-sealing pneumatic vehicle tyre when the suspension is being applied is 30 to 70°C.

8. Process according to one of the preceding claims, **characterized in that** the suspension is applied at least to that surface of the sealant layer (5a) that runs substantially parallel to the belt package in the axial direction.

9. Process according to Claim 8, **characterized in that** the suspension is additionally applied at least to that surface of the sealant layer (5b) that runs in the radial direction.

10. Process according to Claim 9, **characterized in that** the suspension is additionally applied to the radially inwardly directed surface of the inner layer (4).

## Revendications

1. Procédé de fabrication d'un pneumatique de véhicule auto-étanche avec un paquet de ceintures (2), une bande de roulement (1) agencée radialement au-dessus du paquet de ceintures (2) et une couche intérieure (4) réalisée étanche à l'air agencée radialement à l'intérieur, l'auto-étanchéité du pneumatique de véhicule étant obtenue par une couche d'agent d'étanchéité (5) appliquée radialement à l'intérieur ultérieurement après la vulcanisation du pneumatique de véhicule, la couche d'agent d'étanchéité (5) présentant à peu près la largeur du paquet de ceintures (2) et étant agencée à peu près dans sa projection et présentant une section transversale réalisée dans le plan de section transversale contenant l'axe du pneu avec une surface (5a) s'étendant dans la direction axiale essentiellement parallèlement au paquet de ceintures et une surface (5b) s'étendant essentiellement dans la direction radiale, la couche d'agent d'étanchéité (5) est revêtue par application d'au moins une suspension avec un disque de pulvérisation rotatif ou avec un pistolet de pulvérisation et la suspension contenant au moins un sel alcalin d'au moins un acide gras et/ou au moins un sel alcalino-terreux d'au moins un acide gras.

2. Procédé selon la revendication 1, **caractérisé en ce que** la suspension contient de 50 à 70 % en poids d'eau.

3. Procédé selon l'une quelconque des revendications précédentes, **caractérisé en ce que** l'acide gras présente de 8 à 18 atomes de carbone.

4. Procédé selon l'une quelconque des revendications précédentes, **caractérisé en ce que** la suspension contient au moins du stéarate de calcium en tant que sel alcalino-terreux d'au moins un acide gras.

5. Procédé selon l'une quelconque des revendications précédentes, **caractérisé en ce que** la suspension contient du sable.

6. Procédé selon l'une quelconque des revendications précédentes, **caractérisé en ce que** la suspension contient des particules d'élastomère.

7. Procédé selon l'une des revendications précédentes, **caractérisé en ce que** la température du pneumatique de véhicule auto-étanche lors de l'application de la suspension est de 30 à 70 °C.

8. Procédé selon l'une quelconque des revendications précédentes, **caractérisé en ce que** la suspension est appliquée au moins sur la surface de la couche d'agent d'étanchéité (5a) qui s'étend dans la direction axiale essentiellement parallèlement au paquet de ceintures.

9. Procédé selon la revendication 8, **caractérisé en ce que** la suspension est en outre appliquée au moins sur la surface de la couche d'agent d'étanchéité (5b) qui s'étend dans la direction radiale.

10. Procédé selon la revendication 9, **caractérisé en ce que** la suspension est en outre appliquée sur la surface de la couche intérieure (4) orientée radialement vers l'intérieur.
